# EUROPÄISCHE PATENTSCHRIFT

(11) **EP 3 052 919 B1**
(45) Veröffentlichungstag und Bekanntmachung des Hinweises auf die Patenterteilung: **11.04.2018**
(21) Anmeldenummer: 14792402.1
(22) Anmeldetag: 25.09.2014
(51) Int. Cl.: G01M 11/06, G01M 17/007

(54) **ANORDNUNG UND VERFAHREN ZUR ERMITTLUNG VON FAHRWERKS- UND ANDEREN EIGENSCHAFTEN EINES FAHRZEUGS**
DEVICE AND METHOD FOR DETERMINING CHASSIS AND OTHER CHARACTERISTICS OF A VEHICLE
SYSTÈME ET PROCÉDÉ DE DÉTERMINATION DE CHÂSSIS ET AUTRES CARACTÉRISTIQUES D'UN VÉHICULE

(30) Priorität: 30.09.2013 DE 102013110793; 25.11.2013 DE 102013112976
(43) Veröffentlichungstag der Anmeldung: 10.08.2016
(73) Patentinhaber: Hochschule für Technik und Wirtschaft Dresden, 01069 Dresden (DE)
(72) Erfinder: TRAUTMANN, Toralf, 01067 Dresden (DE)
(74) Vertreter: Lippert Stachow Patentanwälte Rechtsanwälte
(86) Internationale Anmeldenummer: PCT/EP2014/070507
(87) Internationale Veröffentlichungsnummer: WO 2015/044277

(56) Entgegenhaltungen:
- EP-A2- 2 136 195
- AT-A4- 507 199
- US-A- 5 140 533
- US-A1- 2011 130 915

## Beschreibung

Die Erfindung betrifft eine Anordnung zur Ermittlung von Fahrwerksigenschaften eines Fahrzeugs, wobei die Anordnung vom Fahrzeug überfahrbar angeordnet ist, die Anordnung ortsveränderlich und auf einer Referenzoberfläche auflegbar ausgeführt ist und dass die Anordnung (1) einen oder mehrere Sensoren aufweist.

Die Erfindung betrifft auch ein Verfahren zur Ermittlung von Fahrwerkseigenschaften eines Fahrzeugs, wobei ein von einem Fahrzeug überfahrbares Mittel bereitgestellt wird, wobei das Mittel von dem Fahrzeug zur Ermittlung der Fahrwerkseigenschaften überfahren wird.

Im Rahmen der periodischen Hauptuntersuchung von Kraftfahrzeugen erfolgt eine Bestimmung von Abweichungen gegenüber einem vorgegebenen Sollzustand des jeweils zu untersuchenden Kraftfahrzeugs. Im Fokus stehen dabei besonders die Komponenten des Fahrwerks, wie beispielsweise die Stoßdämpfer.

Untersucht werden aber beispielsweise auch die Beleuchtungseinrichtung, der Zustand des Fahrzeugkennzeichens oder der optische Zustand eines Fahrzeuges von verschiedenen Positionen aus, wie beispielsweise eine Ansicht von vorn, von hinten oder von unten. Alle hier dargestellten Gegenstände einer möglichen Untersuchung sollen in dieser Schrift unter dem Begriff Fahrzeugeigenschaften oder Eigenschaften eines Fahrzeugs verstanden werden.

Bislang findet hierfür keine sensorunterstützte Überprüfung statt.

Die gegenwärtige Form der Untersuchung des Fahrwerks beschränkt sich mangels mobil verfügbarer Prüftechnik auf eine Sichtkontrolle. Alternativ können während einer Probefahrt mögliche dynamische Einschränkungen durch einen erfahrenen Prüfer festgestellt werden. Derartige Untersuchungen bedingen einen umfangreichen Erfahrungsschatz des Prüfers und sind trotzdem sehr subjektiv in ihrer Aussage zu Zustand des Fahrwerks.

Bei den größeren Prüforganisationen (TÜV, Dekra) sind teilweise geeignete Prüfstände verfügbar, die Vielzahl der selbstständigen Prüfingenieure, welche außerhalb der zentralen Prüfstellen der Prüforganisationen zum Einsatz kommen, verfügt jedoch nicht über solche Prüfmöglichkeiten.

Eine Alternative zu aufwendigen und kostenintensiven Prüfständen stellt die Verwendung von Sensorik im Kraftfahrzeug selbst dar. Hierbei kann beispielsweise die Beschleunigung bei einer Überfahrt über einen Prüfkörper, beispielsweise in Form einer Schwelle, aufgenommen und die Reaktion des Fahrzeuges oder einzelner Baugruppen des Fahrzeuges ausgewertet werden.

Das Problem bei dieser Art der Aufnahme besteht in der fehlenden Referenz zur Oberfläche, es wir nur das Inertialsystem Karosse vermessen, die tatsächliche Höhenänderung kann derart nicht bestimmt werden.

Eine Untersuchung des Zustands der Beleuchtungseinrichtung oder eine Erfassung von Schäden am Kraftfahrzeugkennzeichen, der Karosserie, im Bereich des Unterbodens oder an Baugruppen, wie der Abgasanlage eines Fahrzeuges, sind bisher nur durch eine Sichtkontrolle durch den Prüfer selbst möglich.

Aus der US 2011/0130915 A1 ist ein System zur Fahrzeugzustandserkennung bekannt, welches eine Schwelle aufweist, die von einem Fahrzeug befahren werden kann, wodurch an dem Fahrzeug eine Schwingungserregung auftritt. Während des Befahrens dieser Schwelle wird über Sensoren in der Schwelle im Kontakt mit den Rädern des Fahrzeuges die dynamische Schwingungsantwort auf die durch die Schwelle erregte Schwingung aufgenommen. Dabei erfolgt die Messung beim Überfahren der Schwelle im Millisekundenbereich. Innerhalb dieses kurzen Zeitbereiches steht das Fahrzeugrad mit den Resonanzsensoren im Kontakt. Diese nehmen die impulsartige Schwingungsantwort auf. Eine Auswertung dieser Schwingungsantwort erfolgt dann mittels einer Auswerteeinheit über eine Frequenztransformation und einen Vergleich mit historischen Daten desselben Fahrzeugs oder desselben Fahrzeugtyps. Aus diesem Vergleich kann sodann eine Aussage getroffen werden, inwieweit sich der Fahrzeugzustand verschlechtert hat. Bei dieser Lösung sind an die Messung sehr hohe Anforderungen zu stellen. Zum einen muss gewährleistet werden, dass die Messung während des kurzen Zeitraumes sehr genau erfolgt. Zum anderen sind die Störeinflüsse in dem kurzen Messzeitraum sehr hoch, weshalb unter anderem auch andere Sensoren, wie Temperatursensoren oder Lastsensoren eingesetzt werden, um diese Störgrößen zu ermitteln oder ggf. zu eliminieren.

Weiterhin ist aus der EP 2136195 A2 ein Verfahren zum Prüfen eines Schwingungsdämpfers eines Kraftfahrzeuges im eingebauten Zustand bekannt. Dieses Verfahren arbeitet berührungsfrei. Hierbei ist ebenfalls wieder eine Schwelle vorgesehen, die der Schwingungserregung des Fahrzeuges dient. Mittels seitlich neben dem Fahrzeug angeordneter optischer Aufnahmeeinrichtungen wird sodann das Schwingungsverhalten des Fahrzeuges aufgenommen. Hierbei erfolgen eine Aufnahme des Reifens und eine Aufnahme der Karosserie. Die Aufnahme dient dazu, aus der Bewegung der Karosserie genau die Relativbewegung zwischen Fahrzeug und Reifen festzustellen und somit Reifenschwingungen zu eliminieren und genau nur die Bewegungsabläufe, die durch einen Schwingungsdämpfer hervorgerufen werden, zu ermitteln. Neben der Tatsache, dass es sich hierbei um ein relativ aufwendiges Messverfahren handelt, ist dieses tatsächlich nur auf die Feststellung des Zustandes der Schwingungsdämpfer ausgerichtet. Weitere Einflüsse auf die Fahreigenschaften, wie sie beispielsweise durch eine unzulässige Beweglichkeit des Rahmens oder anderer Bauteile entstehen können, werden dadurch nicht ermittelt.

Weiterhin ist die AT 507199 A4 bekannt, die eine Vorrichtung zum Prüfen der Leuchtweiteneinstellung von Kraftfahrzeugscheinwerfern betrifft. Bei dieser Lösung erfolgt keine Schwingungserregung. Vielmehr wird durch eine Vielzahl von Lichtsensoren das Beleuchtungsverhalten eines Fahrzeuges gemessen und zur Auswertung gebracht, um Festzustellen, ob eine fehlerhafte Scheinwerfereinstellung vorliegt.

In der US 5 140 533 A ist eine Anordnung zur Überprüfung der Position verschiedener Punkte an einem Fahrzeug beschrieben. Diese Lösung dient der Feststellung, ob an dem Fahrzeug Verformungen, etwa durch einen Unfall, aufgetreten sind.

Hierzu wird ein Entfernungsmesser auf einen Messpunkt gerichtet und die Entfernung zu diesem Messpunkt gemessen und an einen Computer übermittelt, der den Messwert speichert. Dieser Computer steuert einen Schrittmotor, der den Entfernungsmesser in eine andere Messrichtung schwenkt, so dass er die Entfernung zu einem anderen Messpunkt messen kann. Auch dieser Messwert wird gespeichert. Aus den Entfernungen und den Messwinkeln wird eine Koordinatenmatrix berechnet und gespeichert. Diese Koordinatenmatrix kann dann mit einer Soll-Koordinatenmatrix verglichen werden. Bei einer festgestellten Abweichung kann von einer Deformation ausgegangen werden.
Der Erfindung liegt somit die Aufgabe zugrunde, eine Anordnung und ein Verfahren zur Ermittlung von Fahrwerks- und anderen Eigenschaften eines Fahrzeuges zu schaffen, womit eine einfache und standortunabhängige Prüfung von Eigenschaften eines Fahrzeugs realisiert werden kann. Außerdem soll die Anordnung robust, einfach in Betrieb zu nehmen und insbesondere durch eine Verringerung des rechentechnischen Aufwandes preiswert herstellbar sein. Darüber hinaus ist es wünschenswert, mittels der Anordnung weitere, über die zur Ermittlung von Fahrwerkseigenschaften eines Fahrzeuges hinausgehende, Prüfungen zu ermöglichen, wie beispielsweise eine Prüfung der Beleuchtungsanlage, der Abgasanlage und des Zustands der Karosserie.

Gemäß der Erfindung nach Anspruch 1 wird die Aufgabe bei einer Anordnung zur Ermittlung von Fahrwerkseigenschaften eines Fahrzeugs der eingangs genannten Art dadurch gelöst, dass ein Sensor als ein einen Abstand zwischen der Referenzoberfläche und Punkten der Fahrzeugunterseite während der Überfahrt des Fahrzeuges in Zeitabständen bestimmender Umfeldsensor ausgebildet ist und eine die Abstandsmessdaten speichernde und daraus den Bewegungs- und/oder Schwingungsverlauf der Karosse ermittelnde zentrale Steuerungs- und Auswerteeinheit vorgesehen ist..

Gemäß der vorliegenden Erfindung wird eine objektive Bewertung des Fahrzeugzustandes durch automatische Aufnahme der Fahrzeugunterseite mittels geeigneter Sensoren oder Aufnahmegeräte während einer Überfahrt des Kraftfahrzeuges über ein in Form und Abmessungen bekannte überfahrbare Anordnung, wie beispielsweise eine Schwelle sichergestellt.

Durch ein Überfahren dieser Schwelle erfolgt eine messtechnisch gut erfassbare Anregung des Fahrwerks des Kraftfahrzeugs. Durch die Aufnahme und Analyse der Reaktion des Kraftfahrzeugs auf diese Anregung können Aussagen über den Zustand des Fahrwerks abgeleitet werden.

Die Aufnahme des Bewegungsablaufs des Fahrzeuges beim Überfahren des vorgegebenen Hindernisses erfolgt durch geeignete Sensorik, wie beispielsweise einen Laserscanner, Videosensorik mit Mono- oder Stereoaufnahmeverfahren und eine sich anschließende automatische Bildbearbeitungs- bzw. Bildverarbeitungsverfahren.

Zu den bei dieser Untersuchung des Fahrwerks ableitbaren Parametern zählen beispielsweise die Dämpfereigenschaften.

Als Erweiterung kann bei einem Vorhandensein von Vergleichsaufnahmen wie einem Vergleichsbild oder einer Vergleichsvideoaufnahme, welche dem Neuzustand des Fahrwerkes entspricht und in einer Datenbank gespeichert wurde, die aktuelle Aufnahme dem Vergleichsbild gegenübergestellt werden und derart eine automatisierte Erkennung von Abweichungen erfolgen, welche durch Veränderungen der Fahrwerkeigenschaften hervorgerufen wurden. Derartige Veränderungen werden beispielsweise durch Materialalterung, Materialverschleiß oder mechanische Defekte hervorgerufen.

Für eine derartige Bewertung des Fahrzeugzustandes kann zusätzlich eine Ermittlung der Fahrzeugmasse mittel in der Schwelle eingebrachter weiterer Sensoren (z.B. Drucksensoren) erfolgen. Da die dem Neuzustand eines Fahrzeuge entsprechenden Vergleichsaufnahmen üblicherweise in einem nicht beladenen Zustand des Fahrzeuges erzeugt wurden, kann es bei der aktuellen Prüfung allein durch eine unterschiedliche Gesamtmasse des Kraftfahrzeuges, bedingt durch eine Zuladung, zu einem von der Vergleichsaufnahme abweichenden Verhalten beim Überfahren der Schwelle kommen.

Durch die Ermittlung der Fahrzeugmasse ermöglicht das erfindungsgemäße Verfahren eine Anpassung an verschiedene Beladungszustände des Kraftfahrzeugs und macht das Verfahren praxistauglich.

In einer Ausgestaltung der Erfindung ist vorgesehen, dass die Anordnung einen rechteckigen, quadratischen, parabelförmigen oder trapezförmigen Querschnitt aufweist.

Die erfindungsgemäße Anordnung muss derart ausgelegt sein, dass sie von einem Kraftfahrzeug während der Untersuchung der Fahrwerkseigenschaften überfahren werden kann. Somit ist die Höhe der Anordnung so zu wählen, dass bei einer Überfahrt keine Beschädigung des Unterbodens des Fahrzeugs erfolgen kann, aber auch mindesten so hoch, dass eine Anregung des Fahrzeuges, also eine Vertikalbewegung des Fahrzeuges, während der Überfahrt erzeugt wird. Die Anordnung kann die Form einer Schwelle, also einen rechteckigen Querschnitt aufweisen, ist aber nicht auf diese Querschnittsform beschränkt.

Somit kann die Anordnung neben den aufgeführten Querschnitten jeden anderen Querschnitt aufweisen, welcher eine gezielte Anregung des Fahrwerks bei der Überfahrt gewährleistet und zu keinen Schäden am Fahrwerk oder Fahrzeug selbst führt.
In einer weiteren Ausgestaltung der Erfindung ist vorgesehen, dass die oberen Kanten der Anordnung abgerundet oder angefast sind.
Zur Vermeidung von Schäden an den Reifen des zu untersuchenden Fahrzeuges bei der Überfahrt über die Anordnung ist es vorteilhaft, zumindest die oben liegenden Kanten der Anordnung nicht in einem 90-Grad-Winkel auszuführen. Diese können beispielsweise abgerundet werden. Eine andere Möglichkeit besteht darin die Kanten mittels einer Fase zu brechen, also entlang der Kante angeschrägt. Der Querschnitt der Anordnung kann aber auch beliebige andere Formen aufweisen, wie beispielsweise eine Dreieckform oder einen halbrunden Querschnitt.

In der Anordnung sind Sensoren derart eingebracht, dass diese eine Überfahrt mit einem Fahrzeug nicht behindern aber durch die Überfahrt auch nicht beschädigt werden können. Beispielsweise können die Sensoren im Inneren einer hohlen Anordnung angeordnet werden oder es werden Vertiefungen in die aus einem Vollmaterial bestehenden Anordnung zum Einbringen der Sensoren bereitgestellt. Die eingebrachten Sensoren können dann zum Schutz gegen mechanische Einwirkungen oder ein Eindringen von Schmutz oder Feuchtigkeit mit einer geeigneten Abdeckung versehen werden, welche die physikalischen Eigenschaften der Sensoren nicht oder nur in einem sehr geringen Maß beeinflusst.

Als Sensoren können beispielsweise Ultraschallsensoren zur Abstandsbestimmung verwendet werden. Mittels derartiger Sensoren kann nicht nur ein sich der Anordnung annäherndes oder sich entfernendes Fahrzeug detektiert werden, sondern auch eine Abstandsbestimmung beispielsweise zum Unterboden des Fahrzeugs während der Überfahrt über die Anordnung durchgeführt werden.

Zur Ermittlung der Fahrzeugmasse sind druckempfindliche Sensoren, beispielsweise mittels eines piezoelektrischen Effekts arbeitende Sensoren, vorgesehen. Diese können in einem oberen Bereich der Anordnung platziert sein und somit einen direkten Kontakt zum Rad des Fahrzeuges bei der Massebestimmung aufweisen. Alternativ können sich diese unterhalb der Anordnung befinden und derart sowohl die Masse des Fahrzeuges als auch die der Anordnung selbst bei einer Messung bestimmen.

Da das Verhalten eines Fahrzeuges beim Überfahren der Anordnung auch vom Reifeninnendruck der Reifen des Fahrzeugs abhängig ist, wird vorgesehen, den Reifendruck und/oder eine vom Reifeninnendruck abhängige Aufstandsfläche des jeweiligen Fahrzeugreifens mittels geeigneter Druck- oder Dehnungssensoren zu erfassen und bei der Ermittlung der Fahrwerkseigenschaften zu berücksichtigen.

Ebenfalls möglich ist der Einsatz von Lasersensoren oder Videosensor, beispielsweise zur Aufnahme von Bildern oder Videosequenzen. Derartige Aufnahmen ermöglichen Vergleiche mit bekannten Referenzdaten. Mittels einer automatischen Bilderkennung oder Bildverarbeitung können derart mechanische Veränderungen der Fahrwerkseigenschaften erkannt werden. Mittels dieser Sensoren kann auch der Fahrzeugtyp automatisiert erkannt werden oder mittel der Informationen des Nummernschilds des Fahrzeuges auf gespeicherte in einer vorhergehenden Untersuchung erzeugte Vergleichsdaten zugegriffen werden.
In einer Ausführung der Erfindung ist vorgesehen, dass die Anordnung aus zwei Teilanordnungen besteht.
Durch diese getrennte Bauweise der Anordnung "Schwelle" kann diese einfach zerlegt und problemlos transportiert werden, beispielsweise in einem Kofferraum eines Kraftfahrzeugs, mit welchem ein Prüfingenieur zu verschiedenen Prüfterminen an unterschiedlichen Orten unterwegs ist.
Außerdem ermöglicht diese getrennte Bauweise eine andere Art der Anregung des Fahrwerks eines Fahrzeuges, bei welcher die Räder einer Achse des Fahrzeuges nacheinander angeregt werden.
In einer weiteren Ausführungsform der Erfindung ist vorgesehen, dass die Anordnung Mittel zur Datenübertragung aufweist.
Der zwischen der Anordnung und einer zentralen Steuer- und Auswerteeinheit notwendige Datenaustausch wird vorzugsweise über eine drahtlose Schnittstelle realisiert. Hierfür kann jeder beliebige Standard wie Bluetooth, WLAN oder Wifi zu Einsatz kommen. In einer Umgebung mit starken Störungen der Funkübertragung wird die Datenübertragung mittels einer drahtgebundenen Verbindung der Baugruppen realisiert.

Gemäß der Erfindung nach Anspruch 7 wird die Aufgabe bei einem Verfahren zur Ermittlung von Fahrwerkseigenschaften eines Fahrzeugs der eingangs genannten Art dadurch gelöst, dass während der Überfahrt Abstandsbestimmungen zwischen Punkten an der Unterseite des Fahrzeugs und einer Referenzoberfläche erfolgen und dass die derart erzeugten Abstandsmesswerte abgespeichert werden und dass auf der Grundlage der Messwerte eine Bestimmung der Fahrwerkseigenschaften erfolgt.
Das Verfahren sieht vor, dass mittels eines geeigneten Umfeldsensors eine Abstandsmessung zum Unterboden des Fahrzeuges erfolgt. Diese Messung kann beispielsweise durch den Prüfingenieur oder mit der Detektion eines sich der Anordnung annähernden Fahrzeuges gestartet werden. Dann erfolgen mehrere Abstandsmessungen des Sensors in regelmäßigen oder unregelmäßigen Zeitabständen. Die Messdaten werden in der Anordnung gespeichert oder an eine zentrale Einheit übertragen. Zeitgesteuert oder durch die Detektion des sich entfernenden Fahrzeuges kann die Messung beendet werden.
Die derart erzeugten Messwerte repräsentieren den Bewegungsablauf des Fahrzeuges bei der Überfahrt über die Prüfanordnung und ermöglichen somit eine Bewertung der Fahrwerkseigenschaften des Fahrzeuges.
In einer Ausgestaltung der Erfindung ist vorgesehen, dass die Abstandsbestimmung während einer Überfahrt mehrfach periodisch oder zu vorgegebenen Zeitpunkten erfolgt. Erfindungsgemäß werden mehrere Abstandsmessungen bei einer Überfahrt über die Anordnung erzeugt. Diese Messungen können in voneinander gleichen oder unterschiedlichen Zeitabständen erfolgen. Wichtig für die Bewertung ist lediglich eine Anzahl von Messungen, welche es ermöglicht den Bewegungs- und/oder Schwingungsverlauf der Karosse des Fahrzeuges hinreichend genau zu beschreiben, um auf Fahrwerkseigenschaften oder Veränderungen dieser Eigenschaften zu schließen.

In einer Ausführungsform der Erfindung ist vorgesehen, dass die Überfahrt über das überfahrbare Mittel durch die zu einer Achse des Fahrzeugs zugehörigen Räder zeitgleich oder mit einem zeitlichen Abstand nacheinander erfolgt.

Ein Überfahren der Schwelle kann derart erfolgen, dass die Räder einer Achse des Kraftfahrzeugs zeitgleich oder nahezu zeitgleich die Schwelle passieren. Wobei beispielsweise zuerst ein Überfahren mittels der Räder der Vorderachse und nachfolgend ein Überfahren mittels der Räder der Hinterachse oder umgekehrt erfolgt.

Eine weitere Möglichkeit, spezifische Schwingungen anzuregen, besteht in der getrennten Anregung von linker und rechter Fahrzeugseite. Hierzu besteht die Prüfschwelle aus zwei funktionsgleichen Teilen, deren Position zueinander verändert werden kann.

Somit kann beispielsweise eine Überfahrt mit dem linken Vorderrad vor der Überfahrt mit dem rechten Rad, bezogen auf die gleiche Achse des Kraftfahrzeugs, erfolgen.

In einer anderen Ausführungsform der Erfindung ist vorgesehen, dass das überfahrbare Mittel drahtgebunden oder drahtlos mit einer zentralen Steuer- und Auswerteeinheit verbunden ist und das in dieser Einheit auf der Grundlage der Messwerte eine Bestimmung der Fahrwerkseigenschaften erfolgt.

Die überfahrbare Anordnung ist mit einer zentralen Steuer- und Auswerteeinheit verbunden, welche den Ablauf einer Prüfung des Fahrzeuges steuert und die Abstandsmessdaten speichern und auswerten kann. Diese Auswerteeinheit gibt nach der Verarbeitung der Messdaten ein Ergebnis der Prüfung beispielsweise in Form eines Prüfberichts aus. Diese Ausgabe kann an einem Display, Bildschirm, Drucker oder in Form einer Sprachausgabe erfolgen. Die Kopplung zwischen der Anordnung und der zentralen Steuer- und Auswerteeinheit erfolgt vorzugsweise drahtlos.

In einer besonderen Ausführungsform der Erfindung ist vorgesehen, dass das überfahrbare Mittel zweiteilig ausgeführt ist und das beide Teile des Mittels miteinander drahtgebunden oder drahtlos koppelbar sind.

In der vorzugsweise zweiteiligen Ausführung der überfahrbaren Prüfschwelle ist vorgesehen, dass beide Teile sowohl mechanisch miteinander verbunden werden können, als auch Daten miteinander austauschen können. Die mechanische Verbindung erlaubt das Zusammenfügen beider Teile zu einer Prüfschwelle, um beispielsweise ein gleichzeitiges Überfahren der Räder einer Achse des Fahrzeuges zu ermöglichen. Die zweiteilige Ausführung verbessert die Mobilität, da sich der Platzbedarf beim Transport der Prüfschwelle beispielsweise an einen Kofferraum eines Fahrzeuges anpasst. Vorgesehen ist, dass beide Teile Daten miteinander und auch mit einer zentralen Einheit austauschen können, beispielsweise um den Prüfablauf zu steuern oder um Messdaten zu übertragen. Dieser Datenaustausch kann sowohl drahtgebunden als auch drahtlos erfolgen. Die Einheiten verfügen über entsprechende Anschlüsse und elektronischen Einheiten hierfür.

In einer anderen Ausführungsvariante der Erfindung ist vorgesehen, dass das überfahrbare Mittel und/oder die zentrale Steuer- und Auswerteeinheit mit einem HU-Adapter des zu prüfenden Fahrzeugs und/oder einer mobilen Datenverarbeitungsanordnung zum Senden und/oder Empfangen von Daten koppelbar ist.

Eine weitere Verbindung zum Datenaustausch wird zwischen der zentralen Steuer- und Auswerteinheit und einem im Fahrzeug angeordneten HU-Adapter (HU ... Hauptuntersuchung), welcher über geeignete Mittel zur Datenübertragung und Datenspeicherung verfügt, bereitgestellt. Über diese können Daten des Fahrzeuges zur Auswerteeinheit übertragen werden und in die Fahrwerksbewertung einfließen aber auch das Ergebnis der Fahrwerksbewertung an den HU-Adapter übertragen werden.

In einer speziellen Form der Erfindung ist vorgesehen, dass ein Vergleich zwischen den erzeugten Messwerten und vorher erzeugten und in einer Referenzdatenbank abgelegten Referenzwerten erfolgt und dass bei Abweichungen der Werte voneinander ein Fehlersignal ausgegeben wird.

Erfindungsgemäß ist vorgesehen, das Schwingungs- und/oder Fahrverhalten eines Fahrzeuges, beispielsweise im Neuzustand des Fahrzeuges oder einer bereits erfolgten Hauptuntersuchung, bei der Überfahrt der Prüfschwelle mittels der vorgesehenen Sensoren zu erfassen und abzuspeichern. Derart kann eine einen jeweiligen Fahrzeugtyp kennzeichnende Referenzdatenbank erzeugt werden. Darüber hinaus ist es möglich, die erzeugten Prüfdaten zu einem individuellen Fahrzeug mittels einer Fahrzeug-ID oder dem Nummernschild zuzuordnen. Das Verfahren führt einen Vergleich zwischen den Referenzdaten des Fahrzeugtyps oder den individuellen älteren Prüfdaten und den bei der aktuellen Prüfung aufgezeichneten Daten durch und ermittelt die Abweichungen voneinander. Hierfür kann auch Toleranzgrenze vorgesehen werden, innerhalb derer sich die Abweichungen der Vergleichsdaten voneinander bewegen können.

Werden Abweichungen ermittelt oder liegen diese außerhalb des festgelegten Toleranzbereichs sieht das Verfahren die Ausgabe von Informationen vor, welche das Vorliegen derartiger Abweichungen anzeigen (Fehlersignal) und/oder eine direkte Bewertung der Fahrwerkseigenschaften ermöglichen. Dabei kann auch eine Einstufung der Ergebnisse der Untersuchung in Kategorien wie "gut", "verschlissen" oder "defekt" erfolgen.

In einer besonderen Ausgestaltung der Erfindung ist vorgesehen dass vor und/oder nach der Überfahrt des Fahrzeugs über das Mittel mittels des Umfeldsensors des Mittels eine Erfassung eines Zustandes einer Beleuchtungseinrichtung und/oder eines Kraftfahrzeugkennzeichens an einer Front- und/oder Heckseite des Fahrzeugs erfolgt.

Die Erfindung sieht vor auch weitere Eigenschaften eines Fahrzeugs zu erfassen, wie die Funktionsfähigkeit einer Beleuchtungsanlage eines Fahrzeuges von verschiedenen Fahrzeugseiten aus und den Zustand eines Kraftfahrzeugkennzeichens. Zu diesem Zweck kann beispielsweise eine zentrale Steuereinheit, mittels einer Funkverbindung zu einer Steuereinheit im Fahrzeug, Kommandos zum Einschalten verschiedener Teile der Beleuchtungsanlage oder der Fahrtrichtungsanzeiger übermitteln und somit eine optische Kontrolle ermöglichen.

In einer anderen weiteren Ausgestaltung der Erfindung ist vorgesehen, dass vor und/oder während und/oder nach der Überfahrt des Fahrzeugs (5) über das Mittel (1) mittels des Umfeldsensors (3) des Mittels (1) eine optische Erfassung einer Front- und/oder einer Heckseite und/oder einer Unterseite des Fahrzeugs (5) erfolgt und dass dabei erzeugte Bilder oder Videosequenzen gespeichert werden.

Der schwenkbar ausgeführte Umfeldsensor, beispielsweise als ein Videosensor ausgeführt, wird bei der Anfahrt des Fahrzeugs zur Prüfeinrichtung derart eingestellt, dass Fotos und/oder Videosequenzen von der Frontseite des anfahrenden Fahrzeugs erstellt werden können. Die Fotos und/oder Videoaufnahmen werden in einem Speicher abgespeichert und stehen dort zum Auslesen durch eine Auswertungs- oder Nachverarbeitungseinheit bereit. Derart kann beispielsweise eine Verformung der Karosserie oder ein Defekt am Kraftfahrzeugkennzeichen oder der Beleuchtungseinrichtung festgestellt werden.

Der Videosensor kann nach der Überfahrt der Prüfschwelle auch Foto- und/oder Videoaufnehmen der Heckseite eines abfahrenden Fahrzeugs erzeugen. Zu diesem Zweck wird in eine entsprechende Position geschwenkt.

Diese Aufnahmemöglichkeit mittels des Videosensors besteht auch bei der Überfahrt des Fahrzeugs über die Prüfschwelle. Hierbei kann eine optische Kontrolle der von der Unterseite des Fahrzeuges einsehbaren Baugruppen, wie der Unterbodenverkleidung des Fahrzeugs, der Abgasanlage und anderer. erfolgen.

Die Erfindung soll nachfolgend anhand eines Ausführungsbeispiels näher erläutert werden. In den zugehörigen Zeichnungen zeigt:
- Fig. 1: eine dreiteilige Darstellung verschiedener Zustände beim Überfahren einer Prüfschwelle,
- Fig. 2: eine Darstellung der erfindungsgemäßen Prüfschwelle und deren Verbindungen zu einem Auswerterechner sowie optional einem im Fahrzeug befindlichen HU-Adapter,
- Fig. 3: eine Darstellung der erfindungsgemäß geteilten Prüfschwelle in einer Variante zum zeitgleichen (links) und zeitversetzten Überfahren durch eine zu untersuchendes Kraftfahrzeug,
- Fig. 4: eine Darstellung der erfindungsgemäßen Prüfschwelle und deren Verbindungen wie in der Figur 3 gezeigt, mit einer zusätzlichen Verbindung zu einem Smartphone zur Anzeige von Steuerkommandos und Informationen zur Prüfung und
- Fig. 5: eine Darstellung der erfindungsgemäßen Prüfschwelle mit weiteren Sensoren, welche auf die Fahrzeugfront (links) oder das Fahrzeugheck (rechts) ausrichtbar sind.

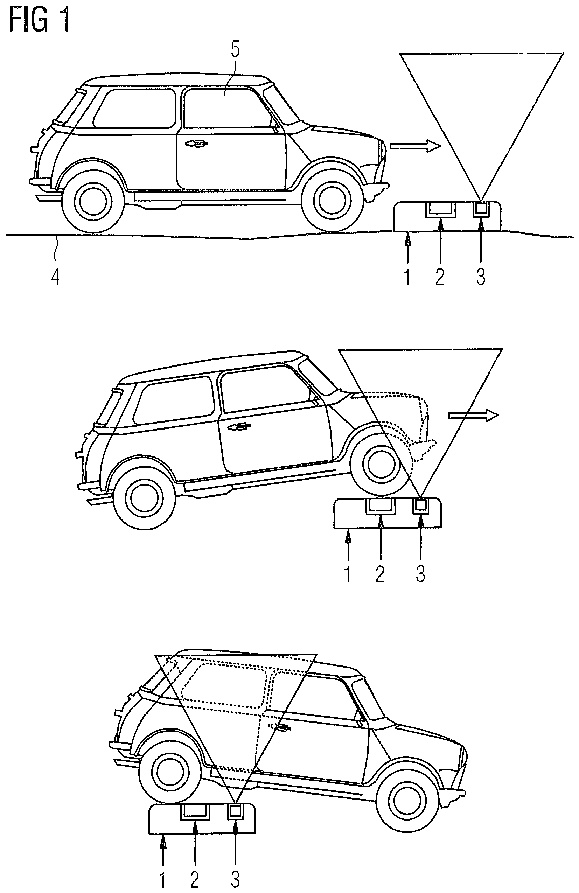

In der Figur 1 ist eine überfahrbare Anordnung (1) zur Ermittlung von Fahrwerkseigenschaften eines Fahrzeuges (5) dargestellt. Diese auch als Prüfschwelle (1) bezeichnete Anordnung ist ortsveränderlich ausgeführt und wird auf eine Referenzoberfläche (4), wie die Erdoberfläche, eine betonierte oder asphaltierte Ebene oder Ähnliches, aufgelegt.

Die Prüfschwelle beinhaltet mindestens einen Sensor (2) zur Ermittlung der der Masse eines Kraftfahrzeugs oder zumindest einem Teil der Masse im Moment des Überfahrens des Sensors (2). Außerdem beinhaltet die Prüfschwelle mindestens einen Umfeldsensor (3), welcher ein Laser- oder Videosensor sein kann.

Die linke Teilfigur der Abbildung nach Figur 1 zeigt ein Fahrzeug (5) bei der Annäherung an die Prüfschwelle (1). Das Fahrzeug (5) erreicht die Prüfschwelle (1) und befährt diese mit den Rädern der Vorderachse, wie in der mittleren Abbildung der Figur 1 dargestellt. Dieses Befahren kann durch den Umfeldsensor (3) erfasst und eine Abstandsmessung mittels des Sensors (3) gestartet werden. Ein manueller Start durch den Prüfingenieur ist ebenfalls möglich.

Der Sensor (2) erfasst die Fahrzeugmasse oder denjenigen Teil der Masse, welcher im Moment der Überfahrt über diesen Sensor (2) wirkt, wie in der mittleren Abbildung der Figur 1 zu sehen ist. Die Masseermittlung kann bei einer Überfahrt über die Prüfschwelle (1) ohne eine Unterbrechung aber auch während einer Unterbrechung der Bewegung des Fahrzeuges (5), zu einem Zeitpunkt wie in der mittleren Abbildung der Figur 1 dargestellt ist, in dem sich das Rad genau über dem Sensor (2) befindet, erfolgen.

Die rechte Abbildung der Figur 1 zeigt den weiteren Verlauf der Überfahrt über die Prüfschwelle (1), wobei diese nun mit den Rädern der Hinterachse des Fahrzeugs (5) überfahren wird. Auch zu dieser Zeit werden Abstandsmessungen zu Fahrzeugboden mittels des Sensors (3) durchgeführt und die Messwerte abgespeichert. Bei der Überfahrt der Räder der Hinterachse über den Sensor (2) kann wiederum eine Massebestimmung erfolgen.

Nach dem Verlassen der Prüfschwelle (1) durch die Hinterräder wird die Abstandsmessung noch fortgesetzt, bis eine vorgegebene Zeit abgelaufen ist oder das Heck des Fahrzeuges durch den Umfeldsensor (3) detektiert wurde.

Wenn eine Achse des Fahrzeuges (5) die Schwelle (1) verlässt, wird eine Schwingung im Fahrzeug angeregt. Deren Kennwerte (Frequenz, Amplitude) können durch die Sensorik (3) sehr genau ermittelt werden. Da das Verhalten von schadhaften Dämpfern hier eindeutige Signale liefert, kann eine quantitative Bewertung der Fahrwerksqualität erfolgen.

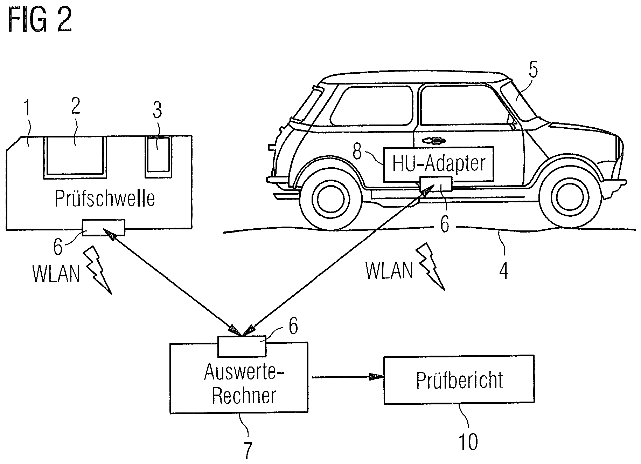

Die Figur 2 zeigt einen Teil der aus zwei Teilen bestehenden Prüfschwelle (1) mit dem Sensor (2) und dem Umfeldsensor(3). Die Prüfschwelle (1) beinhaltet auch eine Datenübertragungsanordnung (6) zur Übertragung von Abstandsmessdaten zu einer zentralen Steuer- und Auswerteeinheit (7) oder zum Empfang von Daten oder Steuersignalen von dieser.

Auch die zentrale Steuer- und Auswerteeinheit (7) beinhaltet eine Datenübertragungsanordnung (6). Die Datenübertragungsanordnung (6) ist derart gestaltet, dass diese sowohl einen drahtgebundenen als auch einen drahtlosen Datenaustausch ermöglicht. In der zentralen Steuer- und Auswerteeinheit (7) erfolgen die Auswertung der übertragenen Daten und eine Bewertung der Fahrwerkseigenschaften des Fahrzeugs (5). Hierzu kann das Ergebnis in Form eines Prüfberichts (10) ausgegeben werden.

Zusätzlich können auch Daten aus einem HU-Adapter (8) des Fahrzeugs (5) ebenfalls über eine weitere Datenübertragungsanordnung (6) zur zentralen Steuer- und Auswerteeinheit (7) übertragen und mit dem Prüfbericht (10) ausgegeben werden. Alternativ kann das Ergebnis der Prüfung der Fahrwerkseigenschaften an den HU-Adapter (8) übertragen und in diesem gespeichert werden. So kann für nachfolgende Untersuchungen auf einen gespeicherten Referenzwert zurückgegriffen werden.

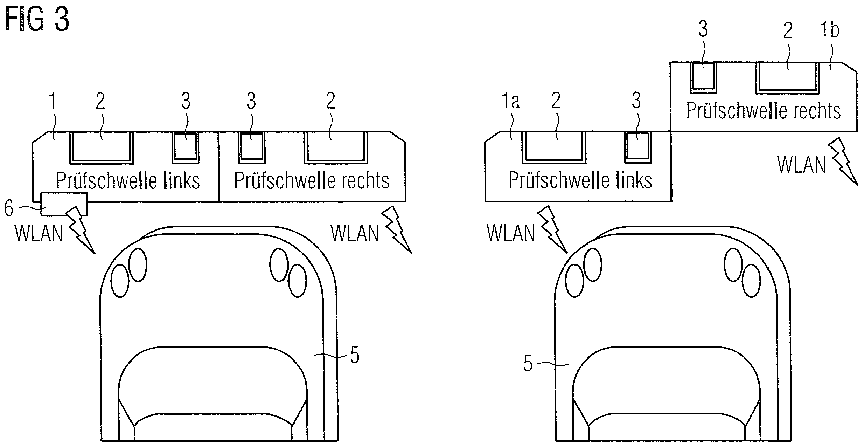

Die Anregung der Schwingung zur Untersuchung der Fahrwerkseigenschaften des Fahrzeugs (5) erfolgt im Normalfall durch Überfahrt der Prüfschwelle (1) von linkem und rechtem Rad einer Achse des Fahrzeugs (5) zur selben Zeit. Dieser Fall ist in der Figur 3 in der linken Abbildung dargestellt. Da möglicherweise aber hierdurch nicht alle Parameter eindeutig ermittelt werden können, ist auch die getrennte Überfahrt vorgesehen, wie in der rechten Abbildung der Figur 3 dargestellt ist.

Der Abstand zwischen linker- (1a) und rechter Teilschwelle (1b) der Prüfschwelle (1) ist dabei nicht generell festgelegt, sondern kann vom Fahrzeugmodell abhängig sein. Möglich sind auch mehrere Messungen bei Überfahrten unterschiedlicher Beabstandung der Teilschwellen (1a und 1b) voneinander zur eindeutigen Charakterisierung der Fahrwerkseigenschaften.

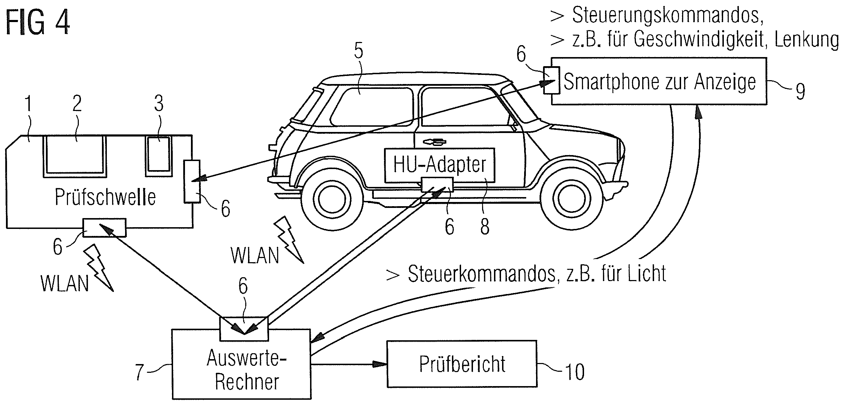

Die Figur 4 bildet erneut die erfindungsgemäße Prüfanordnung mit ihren Teilbaugruppen ab. Darüber hinaus ist eine bidirektionale Schnittstelle für den Datenaustausch zwischen HU-Adapter (8) und zentraler Steuer- und Auswerteeinheit (7) dargestellt, über welchen auch Steuerkommandos an das Fahrzeug (5) zur Prüfung weitere Baugruppen übertragen werden können. Derart kann beispielsweise während der Anfahrt zur Prüfschwelle bereits eine Kontrolle der Beleuchtungseinrichtungen an der Frontseite des Fahrzeugs (5) erfolgen. Dies Betrifft beispielsweise das Abblend- oder Fernlicht wie auch Zusatzlichter (Standlicht, Nebelscheinwerfer u. a.) und die Fahrtrichtungsanzeiger des Fahrzeugs (5).

Derart können auch die Beleuchtungseinrichtungen am Heck des Fahrzeugs (5) nach dem Überfahren der Prüfschwelle (1) geprüft werden. Die betrifft in diesem Fall die vorgeschriebene Heckbeleuchtung sowie die Nebelschlussleuchte, den Rückfahrscheinwerfer und die Fahrtrichtungsanzeiger des Fahrzeugs (5).

Möglich ist auch eine Übertragung von Daten der Prüfschwelle oder der zentralen Steuer- und Auswerteeinheit (7) an eine mobile Datenkommunikationseinrichtung (9) wie einen Laptop oder ein Smartphone und umgekehrt. So können dem Fahrer Informationen bezüglich der Geschwindigkeit bei der Überfahrt bereitgestellt werden. Ebenfalls kann dem Fahrer derart in Erfolg oder Misserfolg der Prüfung übermittelt werden, etwa weil die Geschwindigkeit des Fahrzeuges bei der Überfahrt nicht im vorgegebenen Toleranzbereich lag, der Winkel zwischen Fahrzeug (5) und Prüfschwelle bei der Überfahrt zu stark vom geforderten 90-Grad-Winkel abwich oder andere Störungen aufgetreten sind.

Eine Übertragung und Anzeige der in einem Prüfbericht (10) enthaltenen Informationen ist ebenfalls möglich.

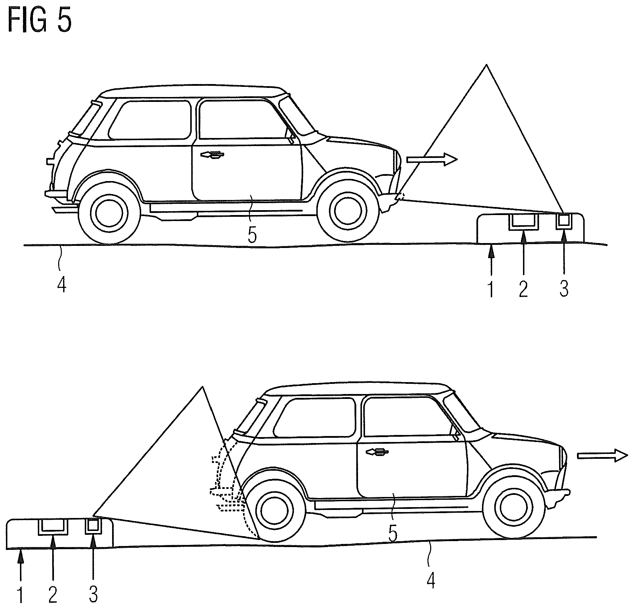

In der Figur 5 ist eine spezielle Ausführung der Umfeldsensoren (3) dargestellt, welche schwenkbar ausgelegt sind. Dies ermöglicht eine optimale Erfassung der Front des Fahrzeugs (5) bei seiner Anfahrt zur Prüfschwelle (1), dargestellt in der linken Abbildung der Figur5, sowie die des Hecks nach der Überfahrt, wie in der rechten Abbildung der Figur 5 dargestellt ist. Somit können beispielsweise die oben beschriebenen Untersuchungen der Beleuchtungsanlage des Fahrzeugs (5) automatisiert werden. Mittels einer geeigneten Bildverarbeitung kann derart die Reaktion des Fahrzeugs bzw. der Fahrzeugbeleuchtung analysiert werden und das Ergebnis zur Anzeige gebracht werden. Derart kann beispielweise die Funktionsweise der Beleuchtungseinrichtung erfasst werden. Mittels entsprechender Auswertungsmöglichkeiten könnte auch eine Überprüfung der richtigen Scheinwerfereinstellung durchgeführt werden.

Eine hierbei erfolgte Erkennung des Nummernschilds kann für die Erstellung des Prüfberichts genutzt werden oder eine Zuordnungsmöglichkeit der Ergebnisse der Untersuchung zu einem speziellen Fahrzeug (5) bereitstellen.

Eine weitere Einsatzmöglichkeit der erfindungsgemäßen Prüfanordnung besteht in einer Einbringung im Bereich einer Werkstatteinfahrt. Hier könnten bei der Anfahrt, überfahrt und auch abfahrt bezogen auf die Prüfschwelle eine Anzahl verschiedener Eigenschaften eines zu untersuchenden Fahrzeugs erfasst werden. Diese Daten können in der Werkstatt zur Anzeige gebracht werden und erlauben derart bereits eine erste Bewertung des Fahrzeuges bereits in einem ersten Gespräch mit dem Fahrzeugführer.

### Bezugszeichenliste

- 1: überfahrbare Anordnung (Prüf-Schwelle)
- 2: Sensor zur Massebestimmung
- 3: Umfeldsensor
- 4: Referenzoberfläche
- 5: Fahrzeug
- 6: Datenübertragungsanordnung
- 7: zentrale Steuer- und Auswerteeinheit
- 8: HU-Adapter des Fahrzeugs
- 9: mobile Datenverarbeitungsanordnung 10 Prüfbericht

## Patentansprüche

1. Anordnung zur Ermittlung von Fahrwerkseigenschaften eines Fahrzeugs, wobei die Anordnung (1) vom Fahrzeug (5) überfahrbar angeordnet ist, die Anordnung (1) ortsveränderlich und auf einer Referenzoberfläche (4) auflegbar ausgeführt ist und dass die Anordnung (1) einen oder mehrere Sensoren (2, 3) aufweist, **dadurch gekennzeichnet, dass** ein Sensor als ein einen Abstand zwischen der Referenzoberfläche und Punkten der Fahrzeugunterseite während der Überfahrt des Fahrzeuges in Zeitabständen bestimmender Umfeldsensor ausgebildet ist und eine die Abstandsmessdaten speichernde und daraus den Bewegungs- und/oder Schwingungsverlauf der Karosse ermittelnde zentrale Steuerungs- und Auswerteeinheit vorgesehen ist.

2. Anordnung nach Anspruch 1, **dadurch gekennzeichnet, dass** die Anordnung (1) einen rechteckigen, quadratischen, parabelförmigen oder trapezförmigen Querschnitt aufweist.

3. Anordnung nach Anspruch 1 oder 2, **dadurch gekennzeichnet, dass** die oberen Kanten der Anordnung (1) abgerundet oder angefasst sind.

4. Anordnung nach einem der Ansprüche 1 bis 3, **dadurch gekennzeichnet, dass** die Umfeldsensoren (3) zur Abstandsbestimmung Laserscanner, Ultraschall und/oder Videosensoren sind oder die Anordnung weiterhin Drucksensoren (2), zur Detektion der Fahrzeugmasse und/oder einer Reifenaufstandsfläche, unfasst.

5. Anordnung nach einem der Ansprüche 1 bis 4, **dadurch gekennzeichnet, dass** die Anordnung (1) aus zwei Teilanordnungen (1a, 1b) besteht.

6. Anordnung nach einem der Ansprüche 1 bis 5, **dadurch gekennzeichnet, dass** die Anordnung (1) Mittel zur Datenübertragung (6) aufweist.

7. Verfahren zur Ermittlung von Fahrwerkseigenschaften mit Hilfe der Anordnung einer der vorhergehenden Ansprüche 1 bis 6, wobei die von einem Fahrzeug überfahrbare Anordnung (1) bereitgestellt wird, die auf die Referenzoberfläche (4) auflegbar ist, wobei die Anordnung (1) von dem Fahrzeug (5) zur Ermittlung der Fahrwerkseigenschaften überfahren wird, **dadurch gekennzeichnet, dass** während der Überfahrt Abstandsbestimmungen zwischen Punkten an der Unterseite des Fahrzeugs (5) und der Referenzoberfläche (4) erfolgen und das die derart erzeugten Abstandsmesswerte abgespeichert werden und dass auf der Grundlage der Messwerte eine Bestimmung der Fahrwerkseigenschaften erfolgt, wobei die Abstandsbestimmung während einer Überfahrt mehrfach periodisch oder zu vorgegebenen Zeitpunkten erfolgt und aus der Mehrzahl der Abstandsmesswerte der Bewegungs- und/oder Schwingungsverlauf der Karosse ermittelt wird.

8. Verfahren nach Anspruch 7, **dadurch gekennzeichnet, dass** die Überfahrt über die überfahrbare Anordnung
(1) durch die zu einer Achse des Fahrzeugs (5) zugehörigen Räder zeitgleich oder mit einem zeitlichen Abstand nacheinander erfolgt.

9. Verfahren nach einem der Ansprüche 7 oder 8, **dadurch gekennzeichnet, dass** die überfahrbare Anordnung (1) drahtgebunden oder drahtlos mit einer zentralen Steuer- und Auswerteeinheit (7) verbunden ist.

10. Verfahren nach einem der Ansprüche 7 bis 9, **dadurch gekennzeichnet, dass** die überfahrbare Anordnung (1) zweiteilig ausgeführt ist und das beide Teile (1a, 1b) der Anordnung (1) miteinander drahtgebunden oder drahtlos koppelbar sind.

11. Verfahren nach einem der Ansprüche 7 bis 10, **dadurch gekennzeichnet, dass** die überfahrbare Anordnung (1) und/oder die zentrale Steuer- und Auswerteeinheit (7) mit einem HU-Adapter (8) des zu prüfenden Fahrzeugs (5) und/oder einer mobilen Datenverarbeitungsanordnung (9) zum Senden und/oder Empfangen von Daten koppelbar ist.

12. Verfahren nach einem der Ansprüche 7 bis 11, **dadurch gekennzeichnet, dass** ein Vergleich zwischen den erzeugten Messwerten und vorher erzeugten und in einer Referenzdatenbank abgelegten Referenzwerten erfolgt und dass bei Abweichungen der Werte voneinander ein Fehlersignal ausgegeben wird.

13. Verfahren nach einem der Ansprüche 7 bis 12, **dadurch gekennzeichnet, dass** vor und/oder nach der Überfahrt des Fahrzeugs (5) über die Anordnung (1) mittels des Umfeldsensors (3) des Mittels (1) eine Erfassung eines Zustandes einer Beleuchtungseinrichtung und/oder eines Kraftfahrzeugkennzeichens an einer Front- und/oder Heckseite des Fahrzeugs (5) erfolgt.

14. Verfahren nach einem der Ansprüche 7 bis 12, **dadurch gekennzeichnet, dass** vor und/oder während und/oder nach der Überfahrt des Fahrzeugs (5) über die Anordnung (1) mittels des Umfeldsensors (3) des Mittels (1) eine optische Erfassung einer Front- und/oder einer Heckseite und/oder einer Unterseite des Fahrzeugs (5) erfolgt und dass dabei erzeugte Bilder oder Videosequenzen gespeichert werden.

## Claims

1. Arrangement for determining chassis properties of a vehicle, wherein the arrangement (1) is arranged in such a way that it can be driven over by the vehicle (5), the arrangement (1) is embodied in a positionally variable fashion in such a way that it can be positioned on a reference surface (4), and in that the arrangement (1) has one or more sensors (2, 3), **characterized in that** one sensor is embodied as a surroundings sensor which determines a distance between the reference surface and points on the underside of the vehicle at time intervals while the vehicle is driving over, and a central control and evaluation unit is provided which stores the distance measurement data and determines therefrom the movement profile and/or vibration profile of the vehicle body.

2. Arrangement according to Claim 1, **characterized in that** the arrangement (1) has a rectangular, square, parabolic or trapezoidal cross section.

3. Arrangement according to Claim 1 or 2, **characterized in that** the upper edges of the arrangement (1) are rounded or chamfered.

4. Arrangement according to one of Claims 1 to 3, **characterized in that** the surroundings sensors (3) for determining the distance are laser scanners, ultrasonic sensors and/or video sensors, or the arrangement also comprises pressure sensors (2) for detecting the mass of the vehicle and/or a tyre contact surface.

5. Arrangement according to one of Claims 1 to 4, **characterized in that** the arrangement (1) is composed of two partial arrangements (1a, 1b).

6. Arrangement according to one of Claims 1 to 5, **characterized in that** the arrangement (1) has data transmission means (6).

7. Method for determining chassis properties using the arrangement of one of the preceding Claims 1 to 6, wherein the arrangement (1) which can be driven over by a vehicle and can be positioned on the reference surface (4) is made available, wherein the arrangement (1) is driven over by the vehicle (5) in order to determine the chassis properties, **characterized in that** during the driving over, distances are determined between points on the underside of the vehicle (5) and the reference surface (4), and **in that** the distance measurement values which are generated in this way are stored and **in that** the chassis properties are determined on the basis of the measurement values, wherein the distance is determined repeatedly in a periodic fashion or at predefined times during a driving over process, and the movement profile and/or oscillation profile of the vehicle body is determined from the multiplicity of distance measurement values.

8. Method according to Claim 7, **characterized in that** the arrangement (1) which can be driven over is driven over simultaneously by the wheels associated with one axle of the vehicle (5) or in succession at a chronological interval.

9. Method according to one of Claims 7 and 8, **characterized in that** the arrangement (1) which can be driven over is connected in a wire-bound or wireless fashion to a central control and evaluation unit (7).

10. Method according to one of Claims 7 to 9, **characterized in that** the arrangement (1) which can be driven over is embodied in two parts, and **in that** the two parts (1a, 1b) of the arrangement (1) can be coupled to one another in a wire-bound or wireless fashion.

11. Method according to one of Claims 7 to 10, **characterized in that** the arrangement (1) which can be driven over and/or the central control and evaluation unit (7) can be coupled to an HU adapter (8) of the vehicle (5) to be tested and/or to a mobile data processing arrangement (9) in order to transmit and/or receive data.

12. Method according to one of Claims 7 to 11, **characterized in that** a comparison between the generated measured values and previously generated reference values stored in a reference database is carried out, and **in that** in the event of deviations of the values from one another a fault signal is output.

13. Method according to one of Claims 7 to 12, **characterized in that**, before and/or after the driving of the vehicle (5) over the arrangement (1), a state of a lighting apparatus and/or of a motor vehicle number plate on a front side and/or rear side of the vehicle (5) is detected by means of the surroundings sensor (3) of the means (1).

14. Method according to one of Claims 7 to 12, **characterized in that**, before and/or during and/or after the vehicle (5) drives over the arrangement (1), a front side and/or a rear side and/or an underside of the vehicle (5) are/is optically detected by means of the surroundings sensor (3) of the means (1), and **in that** images or video sequences which are generated in the process are stored.

## Revendications

1. Dispositif pour déterminer les caractéristiques de châssis d'un véhicule, dans lequel le dispositif (1) est disposé de manière à ce que le véhicule (5) puisse passer sur celui-ci, le dispositif (1) est conçu pour être déplaçable et peut être placé sur une surface de référence (4), et en ce que le dispositif (1) comporte un ou plusieurs capteurs (2, 3), **caractérisé en ce qu'**un capteur est réalisé sous la forme d'un capteur d'environnement qui détermine une distance entre la surface de référence et des points de la face inférieure du véhicule pendant le passage du véhicule à certains intervalles de temps, et il est prévu une unité centrale de commande et d'évaluation qui stocke les données de mesure de distance et détermine le trajet de déplacement et/ou de vibration du véhicule.

2. Dispositif selon la revendication 1, **caractérisé en ce que** le dispositif (1) présente une section transversale rectangulaire, carrée, parabolique ou trapézoïdale.

3. Dispositif selon la revendication 1 ou 2, **caractérisé en ce que** les bords supérieurs du dispositif (1) sont arrondis ou touchés.

4. Dispositif selon l'une des revendications 1 à 3, **caractérisé en ce que** les capteurs sont des capteurs d'environnement (3) destinés à la détermination de distance, des dispositifs de balayage à laser, des capteurs à ultrasons et/ou des capteurs vidéo ou **en ce que** le dispositif comprend en outre des capteurs de pression (2) destinés à détecter la masse du véhicule et/ou une surface de contact de pneu.

5. Dispositif selon l'une des revendications 1 à 4, **caractérisé en ce que** le dispositif (1) se compose de deux dispositifs partiels (1a, 1b).

6. Dispositif selon l'une des revendications 1 à 5, **caractérisé en ce que** le dispositif (1) comporte des moyens destinés à la transmission de données (6).

7. Procédé pour déterminer des caractéristiques d'un châssis au moyen du dispositif selon l'une des revendications 1 à 6 précédentes, dans lequel on utilise le dispositif (1) sur lequel peut passer un véhicule et sur lequel une surface de référence (4) peut être appliquée, dans lequel le véhicule (5) passe sur le dispositif (1) pour déterminer les caractéristiques du châssis, **caractérisé en ce que** des déterminations de distance sont effectuées pendant le passage entre des points situés sur la face inférieure du véhicule (5) et la surface de référence (4), **en ce que** les valeurs de mesure de distance ainsi générées sont mémorisées et **en ce qu'**une détermination des caractéristiques du châssis est effectuée sur la base des valeurs de mesure, dans lequel la détermination de distance est effectuée plusieurs fois périodiquement ou à des instants prédéterminés pendant un passage et la course de mouvement et/ou de vibration de la carrosserie est déterminée à partir de la majorité des valeurs de mesure de distance.

8. Procédé selon la revendication 7, **caractérisé en ce que** le passage sur le dispositif (1) sur lequel un passage peut être effectué est effectué par les roues d'un essieu du véhicule (5) en même temps ou à des intervalles de temps successifs.

9. Procédé selon l'une des revendications 7 ou 8, **caractérisé en ce que** le dispositif (1) sur lequel un passage peut être effectué est relié par fil ou sans fil à une unité centrale de commande et d'évaluation (7).

10. Procédé selon l'une des revendications 7 à 9, **caractérisé en ce que** le dispositif (1) sur lequel un passage peut être effectué est réalisé en deux parties et **en ce que** les deux parties (1a, 1b) du dispositif (1) peuvent être couplées par liaison par fil ou sans fil.

11. Procédé selon l'une des revendications 7 à 10, **caractérisé en ce que** le dispositif (1) sur lequel un passage peut être effectué et/ou l'unité centrale de commande et d'évaluation (7) peut être couplé à un adaptateur HD (8) du véhicule (5) à tester et/ou à un dispositif mobile de traitement de données (9) destiné à émettre et/ou recevoir des données.

12. Procédé selon l'une des revendications 7 à 11, **caractérisé en ce qu'**une comparaison est effectuée entre les valeurs de mesure générées et des valeurs de référence précédemment générées et enregistrées dans une base de données de référence, et **en ce qu'**un signal d'erreur est délivré si les valeurs diffèrent les unes des autres.

13. Procédé selon l'une des revendications 7 à 12, **caractérisé en ce qu'**avant et/ou après le passage du véhicule (5) sur le dispositif (1), une détection d'état d'un dispositif d'éclairage et/ou d'une plaque d'immatriculation de véhicule est effectuée sur une face avant et/ou arrière du véhicule (5) au moyen du capteur d'environnement (3) du dispositif (1).

14. Procédé selon l'une des revendications 7 à 12, **caractérisé en ce qu'**avant et/ou pendant et/ou après le passage du véhicule (5) sur le dispositif (1), une détection optique d'une face avant et/ou d'une face arrière et/ou d'une face inférieure du véhicule (5) est effectuée au moyen du capteur d'environnement (3) du dispositif (1) et **en ce que** des images ou des séquences vidéo ainsi générées sont mémorisées.
